(19)

Europäisches
Patentamt
European
Patent Office
Office européen
des brevets

(11) **EP 1 767 832 A1**

(12) **EUROPEAN PATENT APPLICATION**
published in accordance with Art. 158(3) EPC

(43) Date of publication:
**28.03.2007 Bulletin 2007/13**

(51) Int Cl.:
*F16H 63/18* (2006.01)          *F16H 61/28* (2006.01)

(21) Application number: **05765447.7**

(22) Date of filing: **28.06.2005**

(86) International application number:
**PCT/JP2005/011804**

(87) International publication number:
**WO 2006/003879 (12.01.2006 Gazette 2006/02)**

(84) Designated Contracting States:
**AT BE BG CH CY CZ DE DK EE ES FI FR GB GR
HU IE IS IT LI LT LU MC NL PL PT RO SE SI SK TR**

(30) Priority: **01.07.2004 JP 2004195632**

(71) Applicant: **YAMAHA HATSUDOKI KABUSHIKI
KAISHA**
**Iwata-shi, Shizuoka 438-8501 (JP)**

(72) Inventors:
• **KOSUGI, Makoto,**
**c/o YAMAHA HATSUDOKI KABUSHIKI K.**
**Iwata-shi,**
**Shizuoka 4388501 (JP)**

• **MURAYAMA, Takuji,**
**c/o YAMAHA HATSUDOKI KABUSHIKI K**
**Iwata-shi,**
**Shizuoka 4388501 (JP)**

(74) Representative: **Grünecker, Kinkeldey,**
**Stockmair & Schwanhäusser**
**Anwaltssozietät**
**Maximilianstrasse 58**
**80538 München (DE)**

(54) **OPERATION FORCE TRANSMISSION MECHANISM AND SADDLE-RIDING-TYPE VEHICLE**

(57)     [Problem to be Solved] To provide an actuation force transmission mechanism utilizing an existing shift control device that is easy to install and maintain.

[Solution] An actuation force transmission mechanism 10 is interposed between a shift actuator and a shift shaft. The mechanism 10 includes: a first coupling part 11a and a second coupling part 11b coupled for movement relative to each other in sliding directions; an urging means 12 for urging the first and second coupling parts 11a, 11b toward a neutral position; and a stopper mechanism 13 for stopping relative movement of the first or second coupling part 11a, 11b when they move relative to each other from the neutral position against the urging force of the urging means 12. The actuation force transmission mechanism 10 is arranged such that, when the shift actuator is stroked by a predetermined amount: the first or second coupling part 11a, 11b moves relatively against the urging force of the urging means 12 until the first or second coupling part 11a, 11b is stopped by the stopper mechanism 13; and then the first and second coupling parts 11a, 11b move together.

FIG. 1

**Description**

Field of the Invention

The present invention relates to an actuation force transmission mechanism for transmitting actuation force of a shift actuator to a shift shaft, provided in a shift control device for a straddle-type vehicle for electrically controlling changing speeds, and relates to a straddle-type vehicle.

Background Art

In some electric shift control devices, a conventional foot-operated shift pedal is not used, but a shift actuator (electric motor) is actuated based on a speed change command signal output from a shift switch to rotate the shift shaft of a transmission for shift change.

In the case of shift change using a foot-operated shift pedal, when a dog in the transmission cannot be disengaged or engaged smoothly, repeated shift operations can eventually complete the shift change. However, with an electric shift control device, when a dog cannot be disengaged or engaged smoothly, smooth shift change cannot occasionally be made.

In an attempt to address such a problem, a method has been proposed to feed back the angle of a shift cam to adjust the operation angle of the shift actuator. This method has the problem of slow shift speed and complexity of the device.

To operate the shift actuator to a predetermined angle in a predetermined period, the shift actuator keeps operating even during abutment of the dog, and hence it is not possible to prevent the dog from rotating with the operation of the shift actuator. It is possible to prevent the dog from rotating with the operation of the shift actuator by, for example, interposing an actuation force transmission mechanism including a spring between the shift actuator and the shift shaft. However, if the load required to disengage the dog cannot be obtained with the spring, the problem arises that the dog cannot be disengaged. In addition, the stroke amount of the shift actuator needs to be increased, and the shift speed is made slower.

In view of the foregoing issues, Patent Document 1 discloses a technique for providing an actuation force transmission mechanism (lost motion mechanism) constituted of an elastic member between the shift actuator and the shift shaft. This lost motion mechanism is interposed between a speed reduction gear mechanism, which is provided between the output shaft and the shift shaft of the shift actuator, and the shift shaft to prevent the shift actuator from being overloaded. After the elastic member is overloaded and hence elastically deformed, when the shift shaft is rotationally driven by the resilient force, the shift shaft can be rotationally driven smoothly without the influence of the inertial mass of the speed reduction gear mechanism, which allows smooth speed change shift operation.

Incidentally, Patent Document 2 discloses a technique for achieving smooth shift change using a foot-operated shift pedal, though not related to an electric shift control device. Specifically, a coupling mechanism is disconnected at a portion between the shift pedal and the shift shaft, and both the disconnected ends are linked via an elastic member with play equivalent to half the stroke of the shift pedal. With this structure, the dog can be disengaged with operation force of the shift pedal directly applied thereto, and can be engaged always by the elastic force of the elastic member, which allows smooth shift change.

Patent Document 1: JP-B-3044498
Patent Document 2: JP-Y-Sho 43-11555

Disclosure of the Invention

Problem to be Solved by the Invention

The actuation force transmission mechanisms including an elastic member described in Patent Document 1 and Patent Document 2 above, however, are both the rotary type, and hence large in size and restricted in terms of installation location. The restriction on the installation location also causes the problem of significant restriction on the layout of the shift actuator.

The present invention has been made in view of the foregoing, and therefore has an object to provide an actuation force transmission mechanism allowing smooth shift change and easy installation.

Means for Solving the Problem

The present invention provides an actuation force transmission mechanism in a shift control device for a straddle-type vehicle for performing shift control in which a shift actuator is stroked by a predetermined amount to rotate a shift shaft. The mechanism includes: a first coupling part and a second coupling part coupled for relative movement in linear directions; an urging means for urging the first and second coupling parts toward a neutral position; and a stopper mechanism for stopping the relative movement of the first or second coupling part when the first or second coupling part is moved relatively from the neutral position against urging force of the urging means. The actuation force transmission mechanism is interposed between the shift actuator and the shift shaft.

In a preferred embodiment, the actuation force transmission mechanism is arranged such that, when resistive force acts against movement of the actuation force transmission mechanism: the first or second coupling part moves relatively against the urging force of the urging means until the first or second coupling part is stopped by the stopper mechanism; and then the first and second coupling parts move together.

In a preferred embodiment, the first coupling part and the second coupling part are constituted of a rod and a cylindrical member for accommodating a part of the rod.

In a preferred embodiment, the urging means includes a coil spring, and is disposed between the rod and the cylindrical member.

Preferably, the rod has portions of different diameters, and a portion of a large diameter is used as a part contacted by the spring.

In a preferred embodiment, the cylindrical member has a step on its inner surface, and the step is used as a part of the stopper mechanism.

In a preferred embodiment, the cylindrical member is constituted with plural members having inner and outer surfaces.

In a preferred embodiment, the cylindrical member includes plural cylindrical members.

In a preferred embodiment, the first coupling part and the second coupling part are arranged such that their distal ends overlap each other in linear directions.

In a preferred embodiment, the shift actuator is coupled to the shift shaft via a coupling rod, and the actuation force transmission mechanism is disposed at an intermediate portion of the coupling rod.

Preferably, the actuation force transmission mechanism is provided in a case held by the coupling rod.

Preferably, the actuation force transmission mechanism is disposed outside an engine case.

The present invention provides a straddle-type vehicle incorporating the actuation force transmission mechanism constructed as described above.

Effect of the Invention

The actuation force transmission mechanism of the present invention allows smooth shift change even when disengagement of the dog is difficult or dog abutment occurs during engagement of the dog.

The actuation force transmission mechanism constructed as described above can slide in linear directions, and hence is compact in size and facilitates the choice of the installation location. The position of the shift actuator relative to the shift shaft can be determined arbitrarily.

Brief Description of Drawings

FIGS. 1 (a) and 1 (b) are conceptual diagrams showing the basic structure of an actuation force transmission mechanism according to the present invention.

FIGs. 2(a) to 2(e) show how an actuation force transmission mechanism 10 operates when a shift actuator is stroked by a predetermined amount in the present invention.

FIGs. 3(a) to 3(g) show a specific structure and operation of the actuation force transmission mechanism 10 in the present invention.

FIG. 4 is a graph showing the rotational angle of a shift shaft versus the stroke length of the shift actuator.

FIG. 5 shows how a neutral position is set using coil springs of different urging forces.

FIG. 6 is a side view of a two-wheeled motor vehicle in the present invention.

FIG. 7 is a plan view of an engine provided with the shift actuator, etc., in the present invention.

FIG. 8 is a side view of the engine provided with the shift actuator, etc., in the present invention.

FIG. 9 is an exploded perspective view of a transmission mechanism in the present invention in the present invention.

FIG. 10 shows the developed shape of grooves in a shift cam in the present invention.

FIG. 11 is a side view of the shift actuator, etc., in the present invention.

FIG. 12 shows an actuation force transmission mechanism according to an embodiment of the present invention in a normal state, in which FIG. 12 (a) is a plan view of the actuation force transmission mechanism, FIG. 12(b) is a sectional view taken along the line B-B of FIG. 12 (a), and FIG. 12 (c) is a sectional view taken along the line C-C of FIG. 12(a).

FIG. 13 shows the actuation force transmission mechanism according to the embodiment of the present invention in the shortest state, in which FIG. 13 (a) is a plan view of the actuation force transmission mechanism, and FIG. 13(b) is a sectional view corresponding to FIG. 13(a).

FIG. 14 shows the actuation force transmission mechanism according to the embodiment of the present invention in the longest state, in which FIG. 14 (a) is a plan view of the actuation force transmission mechanism, and FIG. 14 (b) is a sectional view corresponding to FIG. 14(a).

FIG. 15 shows the actuation force transmission mechanism according to the embodiment of the present invention in a divided state.

FIG. 16 shows the structure of an actuation force transmission mechanism in another embodiment of the present invention.

FIGs. 17 (a) and 17 (b) show the structure of an actuation force transmission mechanism in still another embodiment of the present invention.

FIG. 18 is a block diagram showing an engine control unit, etc., in the present invention.

Description of Reference Numerals and Symbols

10:     actuation force transmission mechanism
11a:    first coupling part
11b:    second coupling part
12:     urging means
12a:    first urging means (coil spring)
12b:    second urging means (coil spring)
13:     stopper mechanism
13a:    first stopper mechanism (stopper member)
13b:    second stopper mechanism (stopper member)
15:     support member
16a:    first opening
16b:    second opening
151:    engine
152:    engine case
155:    speed change mechanism
156:    shift fork
157:    slide rod
158:    shift cam
159:    shift shaft
160:    ratchet mechanism
161:    shift arm
162:    stopper plate
164:    actuation force transmission mechanism
165:    shift actuator
166:    pinion gear
167:    coupling rod
179:    first coupling part
180:    second coupling part
181:    coil spring (urging means)
182:    stopper member (stopper means)
183:    support shaft

Best Mode for Carrying Out the Invention

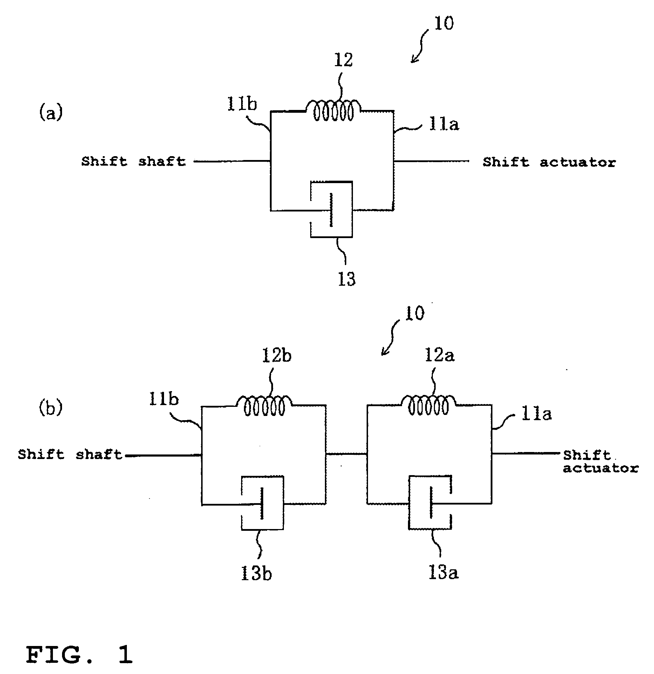

Before starting the description of specific structures of an actuation force transmission mechanism of the present invention, the basic concept of the present invention is first described with reference to FIGs. 1 to 3.
FIGs. 1(a) and 1(b) are conceptual diagrams showing the basic structure of the actuation force transmission mechanism 10 according to the present invention. FIG. 1(a) shows an arrangement with one urging means, and FIG. 1(b) shows an arrangement with two urging means. Normally, the shift actuator is coupled to the shift shaft through a coupling rod or the like. The shift actuator is stroked by a predetermined amount to rotate the shift shaft. The rotation of the shift shaft engages and disengages a dog to control shift change. The subject actuation force transmission mechanism 10 is disposed at an arbitrary intermediate portion of the coupling rod.

The actuation force transmission mechanism 10 shown in FIG. 1(a) includes a first coupling part 11a and a second coupling part 11b coupled for movement relative to each other in sliding directions, an urging means 12 for urging the first and second coupling parts 11a, 11b toward a neutral position, and a stopper mechanism 13 for stopping relative movement of the first or second coupling part 11a, 11b when they move relative to each other from the neutral position against the urging force of the urging means 12.

An actuation force transmission mechanism 10 shown in FIG. 1(b) has a structure similar to that shown in FIG. 1(a), but is provided with an urging means 12 and a stopper mechanism 13 for each of first and second coupling parts 11a, 11b. The first coupling part 11a is provided with a first urging means 12a and a first stopper mechanism 13a for stopping relative movement of the first coupling part 11a in sliding directions, while the second coupling part 11b is provided with a second urging means 12b and a second stopper mechanism 13b for stopping relative movement of the second coupling part 11b in sliding directions.

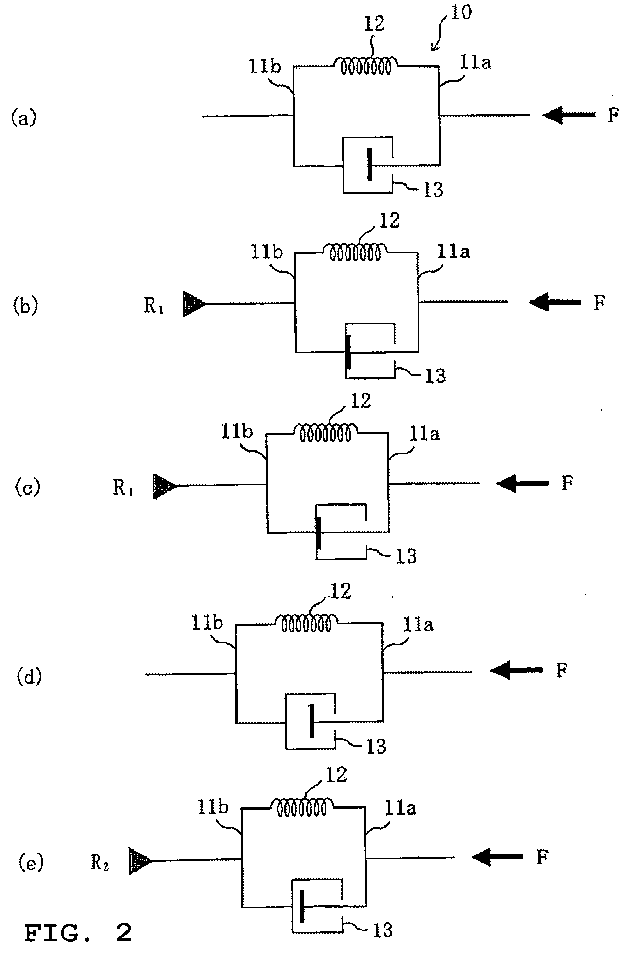

Now, the operation of the above actuation force transmission mechanism 10 is described with reference to FIGs 2(a) to 2(e). The operation of the actuation force transmission mechanism 10 shown in FIG. 1(b) is basically the same as that of the actuation force transmission mechanism 10 shown in FIG. 1(a), and hence only the latter is described here.

FIGs. 2(a) to 2(e) show how the actuation force transmission mechanism 10 operates when the shift actuator is stroked by a predetermined amount.

FIG. 2(a) shows a state in which the first coupling part 11a and the second coupling part 11b are held at the neutral position of the actuation force transmission mechanism 10 by the urging force of the urging means 12. After the shift actuator is stroked by a predetermined amount and a shift up or a shift down is completed, the shift actuator returns to a predetermined position. If the neutral position is deviated at that time, however, the dog is disengaged and engaged at deviated positions by the rotation of the shift shaft at the next shift up or shift down, which may hinder smooth shift change. Thus, the urging force of the urging means 12 needs to be preset such that the neutral position will be prevented from deviating.

When the shift actuator in this state is actuated based on a gear change command signal and starts being stroked by a predetermined amount, actuation force F1 in the direction of the arrow is applied to the actuation force transmission mechanism 10 from the shift actuator side (the right side of the drawing) as shown in FIG. 2(a). At this time, when some resistive force R1 (which will be described specifically later) acts against movement of the actuation force transmission mechanism 10 on the shift shaft side of the actuation force transmission mechanism 10, the urging means 12 (e.g. a compression spring) is compressed and as a result the first coupling part 11a moves relatively from the central position as shown in FIG. 2(b). The first coupling part 11a moves relatively against the urging means 12 until it is stopped by the stopper mechanism 13 as shown in FIG. 2(b).

When the relative movement of the first coupling part 11a is stopped, then the first coupling part 11a and the second coupling part 11b move together as shown in FIG. 2(c). At this time, the actuation force transmission mechanism 10 moves in as it were a "rigid" state and hence can move against the resistive force R1 to effectively rotate the shift shaft.

When the resistive force R1 is no longer applied against the movement of the actuation force transmission mechanism 10 as shown in FIG. 2(d), the urging force of the urging means 12 urges the first coupling part 11a toward the neutral position, and the actuation force transmission mechanism 10 keeps moving as the shift actuator is stroked.

Then, when some resistive force R2 (which will be described specifically later) acts against the movement of the actuation force transmission mechanism 10 again, the urging means 12 is compressed as shown in FIG. 2(d), and as a result the first coupling part 11a moves relatively against the urging means 12 to a point before it is stopped by the stopper mechanism 13 in the same way as in FIG. 2(b). When the relative movement of the first coupling part 11a is stopped, the second coupling part 11b is urged by the urging means 12 against the resistive force R2. Without the resistive force R2, the second coupling part 11b is moved by the urging force of the urging means 12.

As described above, when some resistive force acts against movement of the actuation force transmission mechanism 10 in which the first coupling part 11a and the second coupling part 11b are coupled to each other, the urging means 12 and the stopper mechanism 13 work in conjunction with each other to relatively move the first coupling part 11a (or the second coupling part 11b) for a certain period in order to relieve the resistive force. After the certain period, the first coupling part 11a and the second coupling part 11b move together to allow the actuation force of the shift actuator to act directly on the shift shaft.

The above description describes a typical example of the operation of the transmission mechanism 10. The operation of the actuation force transmission mechanism 10 may vary depending on the magnitude and duration of resistive force which acts on the actuation force transmission mechanism 10, the stroke length of the shift actuator, etc.

For example, in the case where the resistive force R1 is applied to the actuation force transmission mechanism 10 of the above example for only a short period, the compression of the urging means 12 may not move the first coupling part 11a relatively before it is stopped by the stopper mechanism 13, but may allow the first coupling part 11a to return toward the neutral position when the resistive force R1 is no longer applied.

In the case where the shift actuator is stroked in the opposite direction, the actuation force transmission mechanism 10 basically performs the same operation as shown in FIGs. 2 (a) to 2 (e) since the actuation force transmission mechanism 10 has a target structure with respect to the neutral position.

In the operation of the actuation force transmission mechanism 10 of the above example, the first coupling part 11a and the second coupling part 11b are coupled so as to be movable relative to each other in sliding directions. However, the first coupling part 11a, and the second coupling part 11b may be coupled so as to be startable relative to each other in rotating directions.

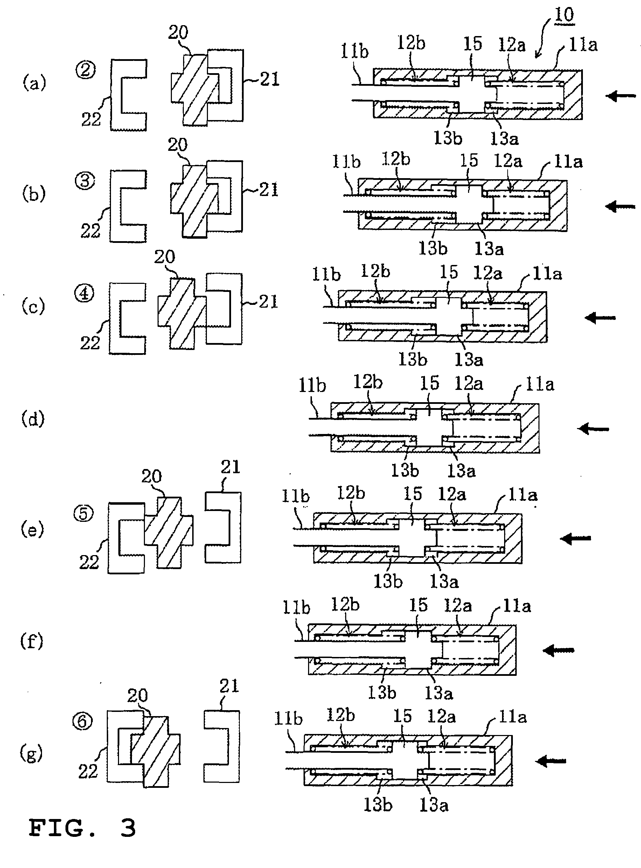

The foregoing describes the conceptual structure and operation of the actuation force transmission mechanism 10. Now, a specific structure and operation of the actuation force transmission mechanism 10 are described in association with actual engagement and disengagement of the dog with reference to FIGs. 3 and 3.

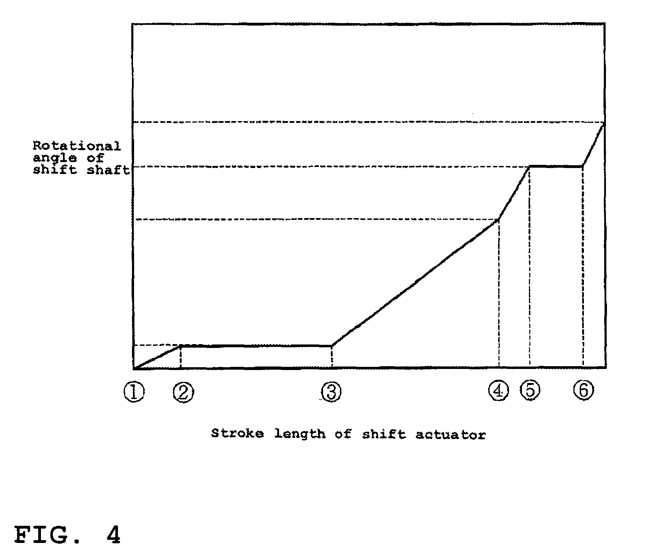

FIGs. 3(a) to 3(g) show the operation of the actuation force transmission mechanism 10 and the operation of a dog mechanism. FIG. 4 shows the rotational angle of the shift shaft versus the stroke length of the shift actuator. The actuation force transmission mechanism 10 described here has an urging mechanism and a stopper mechanism separately for the first and second coupling parts. However, its basic operation is the same as an actuation force transmission mechanism with one urging means and one stopper mechanism.

The right side of FIG. 3(a) shows the actuation force transmission mechanism 10 with the first coupling part 11a and the second coupling part 11b held in the neutral position, and the left side of FIG. 3(a) shows the dog mechanism with a dog 20 engaged with a gear 21.

The first coupling part 11a of the actuation force transmission mechanism 10 is inserted into an opening of and thus slidably coupled to the second coupling part 11b. A first coil spring 12a as an urging means and a first stopper member 13a are disposed in an opening 16a of the first coupling part 11a. Likewise, a second coil spring 12b as an urging means and a second stopper member 13b are disposed in an opening 16b of the second coupling part 11b.

When a gear change command signal is input to the shift actuator in this state, the shift actuator starts being stroked by a predetermined amount. The shift shaft normally has "play" and thus rotates by the play when the shift actuator is first stroked (number 1 to 2 on the horizontal axis of FIG. 4).

As the shift actuator is further stroked, disengagement of the dog starts. Since frictional force of the dog 20 in engagement with the gear 21 acts as resistive force against the movement of the shift actuator as shown in FIG. 3(b), the actuation force transmission mechanism 10 interposed between the shift actuator and the shift shaft operates in such a way that: the first coil spring 12a provided in the first coupling part 11a is compressed, and as a result the second coupling part 11b moves relatively from the central position.

The second coupling part 11b moves relatively against the first coil spring 12a until the first stopper mechanism 13a comes in contact with the sidewall of a support member 15 of the second coupling part 11b. The shift shaft does not rotate as the shift actuator is stroked during this stage of stroke (number 2 to 3 on the horizontal axis of FIG. 4).

When the relative movement of the second coupling part 11b is stopped, then the first coupling part 11a and the second coupling part 11b move together as shown in FIG. 3(c). At this time, since the actuation force transmission mechanism 10 moves in as it were a "rigid" state, the actuation force of the shift actuator is applied directly to the shift shaft and exceeds the above-described frictional force so that the dog 20 disengages from the gear 21 during this stage of stroke (number 3 to 4 on the horizontal axis of FIG. 4).

When the dog 20 is completely disengaged, frictional force of the dog 20 no longer exists. Thus, the urging force of the first coil spring 12a returns the second coupling part 11b toward the neutral position as shown in FIG. 3(d). After the dog 20 is disengaged, the shift shaft rotates with almost no resistive force acting against the movement of the actuation force transmission mechanism 10 (number 4 to 5 on the horizontal axis of FIG. 4).

Then, as shown in FIG. 3(e), resistive force due to abutment of the dog acts against the movement of the shift actuator when the dog 20 engages with a gear 22. Again, as shown in FIG. 3(f), the first coil spring 12a provided in the first coupling part 11a is compressed, and as a result the second coupling part 11b moves relatively from the central position. In the abutment of the dog, small urging force of the first coil spring 12a acts on the dog 20, and allows the dog 20 to engage with the gear 22 smoothly (number 5 to 6 on the horizontal axis of FIG. 4) . When the dog 20 is completely engaged with the gear 22, there no longer exists resistive force as shown in FIG. 3 (g) . Thus, the urging force of the first coil spring 12a returns the second coupling part 11b toward the neutral position.

Preferably, a gap may be provided so that the second coupling part 11b will move relatively not to be stopped by the first stopper mechanism 13a when the shift actuator is fully stroked and in the abutment of the dog, as shown in FIG. 3(f).

As described above, the actuation force transmission mechanism 10 of the present invention including a first coupling part 11a and a second coupling part 11b coupled for movement relative to each other is interposed between the shift actuator and the shift shaft. When the shift actuator is stroked by a predetermined amount, the dog is compulsorily disengaged as the first and second coupling parts are moved together by means of the stopper mechanism 13 (13a, 13b), and engaged (in the abutment of the dog) as the first or second coupling part is moved relatively against the urging force of the urging means 12 (13a, 13b). This allows smooth shift change.

In the above description, the dog is disengaged as the first and second coupling parts move together. However, it should be understood that the dog can be successfully disengaged as the first or second coupling part moves relatively in the case where frictional force of the dog is small.

The actuation force transmission mechanism constructed as described above can slide independently of an existing shift control device, and hence the position of the shift actuator relative to the shift shaft can be determined arbitrarily.

In addition, the actuation force transmission mechanism 10 described above can be easily disposed outside the engine case when the actuation force transmission mechanism 10 is held by a coupling rod coupled to the shift actuator and the shift shaft. Further, the actuation force transmission mechanism 10 described above can be effectively protected from water and dust by disposing it in a case held by the coupling rod.

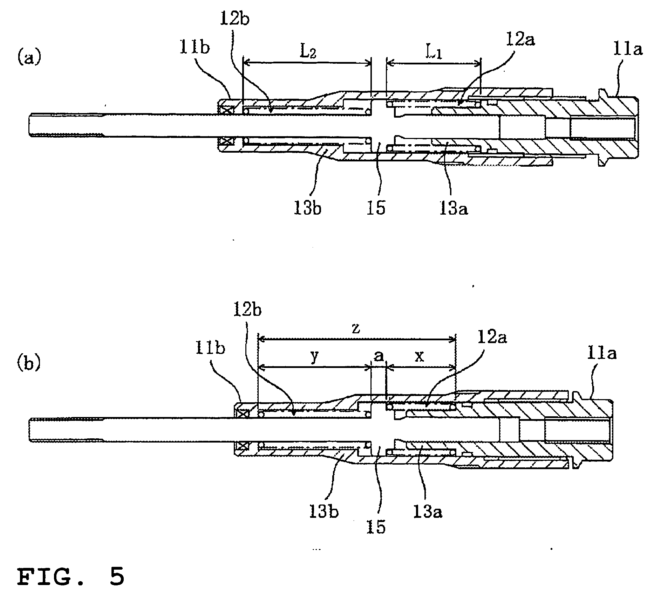

In the case where the urging forces of the first and second coil springs 12a, 12b provided in the first coupling part 11a and the second coupling part 11b are the same in the actuation force transmission mechanism 10 shown in FIG. 3, the neutral position can be set comparatively easily. However, in the case where the urging forces are intentionally different, the neutral position must be set carefully. Now, description will be made of how the neutral position is set using coil springs 12a, 12b of different urging forces with reference to FIG. 5.

As shown in FIG. 5(a), the free length of the first coil spring 12a (spring constant: N1) provided in the first coupling part 11a is defined as L1, and the free length of the second coil spring 12b (spring constant: N2) provided in the second coupling part 11b is defined as L2. Assuming that the first coupling part 11a and the second coupling part 11b of FIG. 5(b) are in the neutral position, and also the lengths of the first coil spring 12a and the second coil spring 12b are respectively x and y, the following equations hold true:

$$x + y + a = z \quad (1)$$

$$N1 \times (L1 - x) = N2 \times (L2 - y) \quad (2)$$

The length x of the first coil spring 12a and the length y of the second coil spring 12b can be determined by solving these simultaneous equations (1), (2).

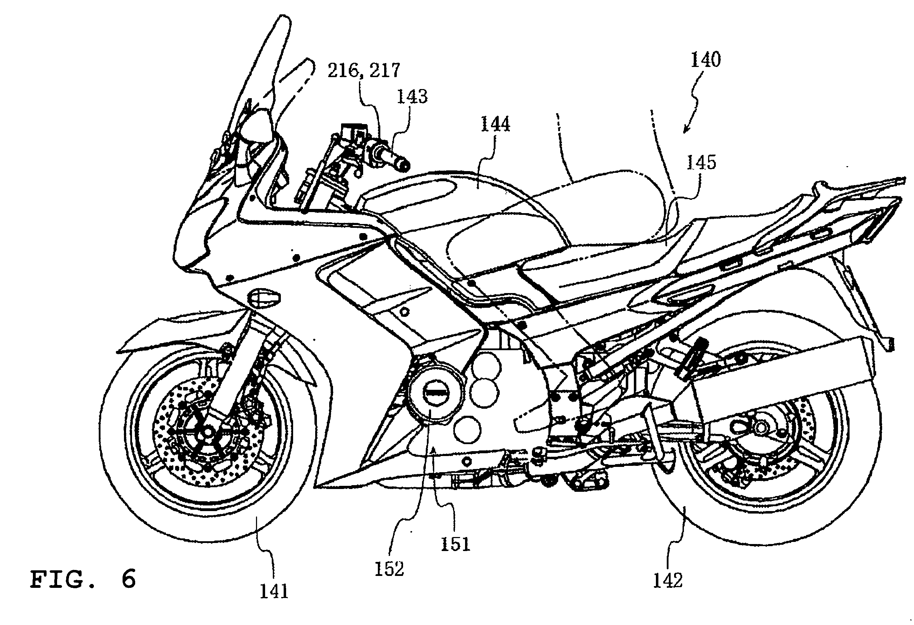

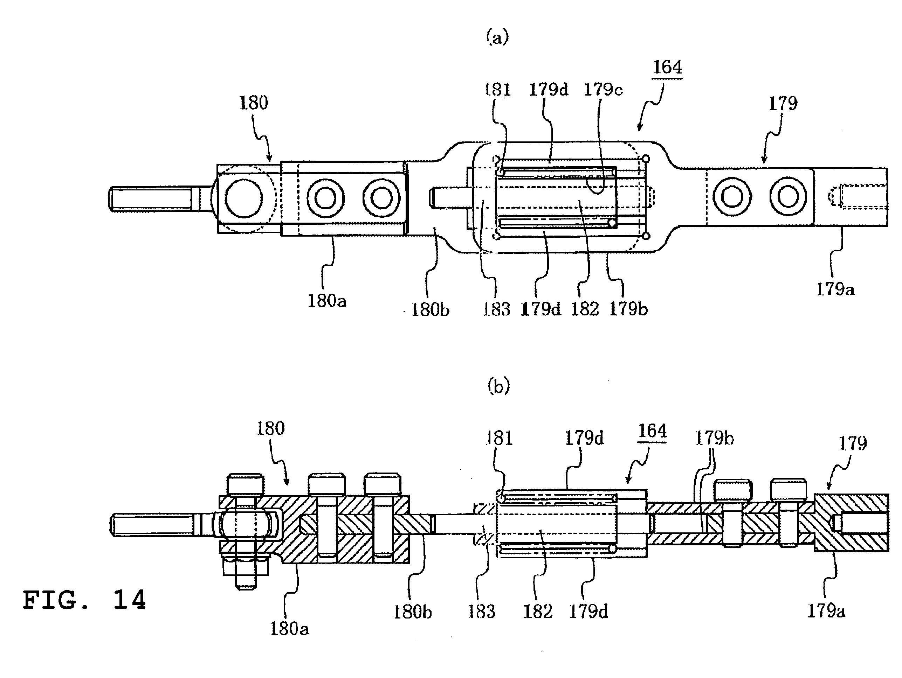

The basic structure of the actuation force transmission mechanism according to the present invention has been described above. Hereinafter, specific structures and operations thereof will be described in detail with reference to FIG. 6 to FIG. 17.

FIG. 6 is a side view of a two-wheeled motor vehicle to which the actuation force transmission mechanism of the present invention is applied. In FIG. 6, reference numeral 140 denotes a two-wheeled motor vehicle as a "straddle-type vehicle", provided with a front wheel 141 on its front side, a rear wheel 142 on its rear side, a fuel tank 144 in rear of handlebars 143, a seat 145 in rear of the fuel tank 144, and an engine 151 supported by a body frame below the fuel tank 144 and the seat 145.

A transmission (not shown) is disposed in an engine case 152 for the engine 151. The transmission has four to six speeds and adopts a dog clutch. Power from a crankshaft of the engine 151 is transmitted to a main axle, and then to a drive axle via gears and dogs for respective speeds.

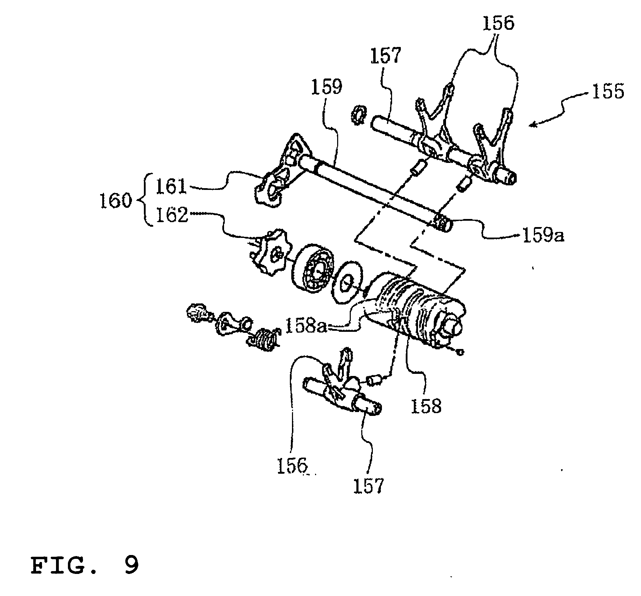

Speed change operation of the transmission is achieved by a speed change mechanism 155 such as shown in FIG. 9. The speed change mechanism 155 includes shift forks 156 for regularly moving slide gears of the transmission, slidably mounted on a slide rod 157, and a rotatable shift cam 158 for sliding the shift forks 156.

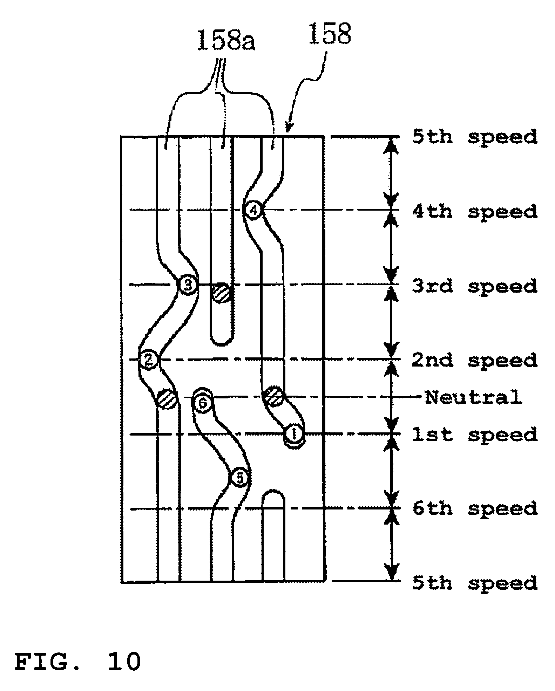

Cam grooves 158a are formed on the periphery of the shift cam 158. When developed, the cam grooves 158a are formed as shown in FIG. 10. The shift forks 156 are adapted to slide along the cam grooves 158a.

The shift cam 158 rotates via a ratchet mechanism 160 as a shift shaft 159 rotates. The ratchet mechanism 160 rotates the shift cam 158 with constant intervals (by a constant angle) to move the shift forks 156 regularly, or in other words has a ratchet function for both forward and reverse directions to change one gear at a time. A shift arm 161 of the ratchet mechanism 160 transmits rotation of the shift shaft 159, and also restricts the stroke of shift shaft 159 to prevent the shift cam 158 from overrunning. A stopper plate 162 of the ratchet mechanism 160 keeps the shift cam 158 in specified positions.

The shift shaft 159 moves rotationally in a predetermined direction through a device such as described below.

A distal end 159a of the shift shaft 159 projects from the engine case 152 to the outside of the engine, and is coupled to an end 167b of a coupling rod 167. An actuation force transmission mechanism 164 is disposed at an intermediate portion of the coupling rod 167. The shift shaft 159 is rotated by driving force of the shift actuator 165 via the actuation force transmission mechanism 164.

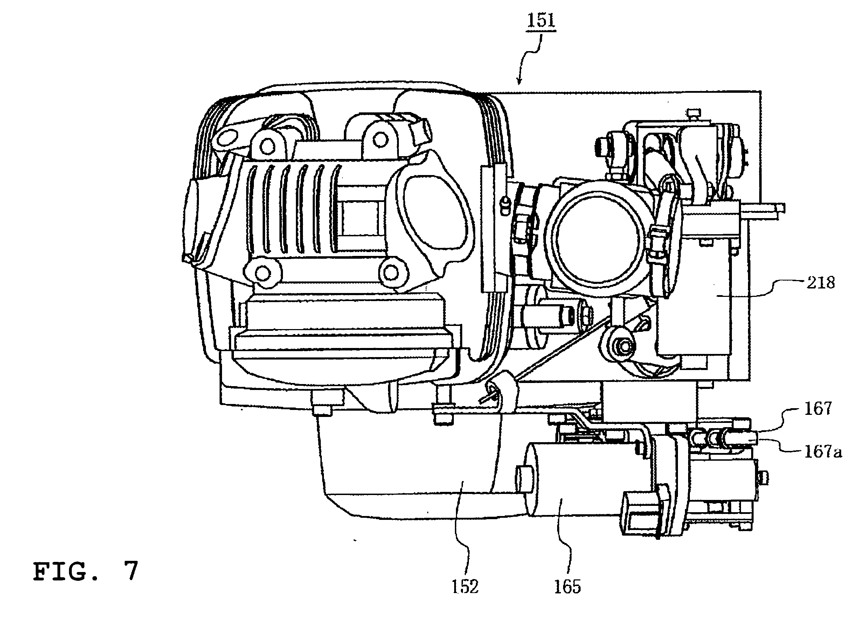

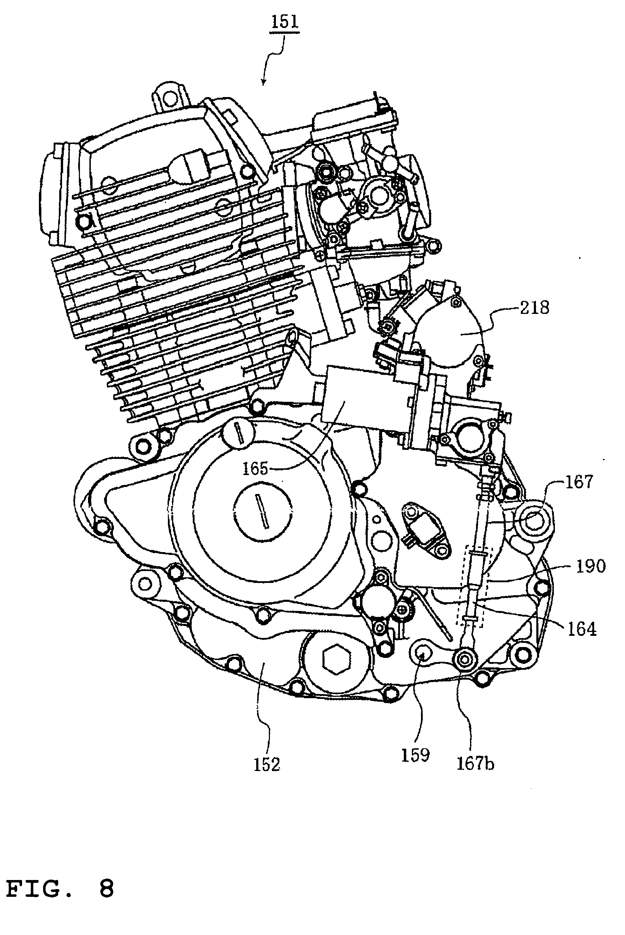

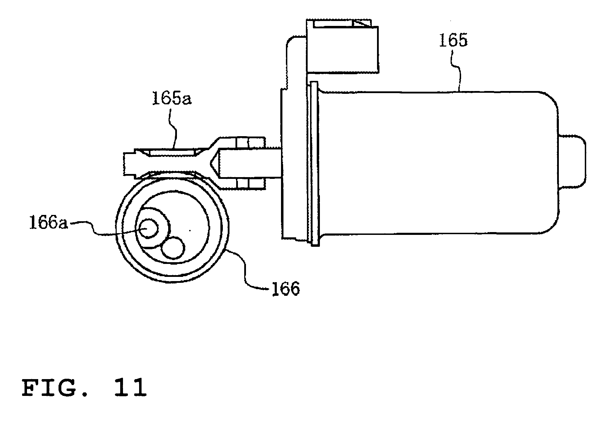

As shown in FIGs. 7 and 8, the shift actuator 165 is disposed on a side of the upper part of the engine case 152 along the longitudinal direction of the vehicle. As shown in FIG. 11, the shift actuator 165 is provided with a warm gear 165a at the distal end of its rotary shaft. The warm gear 165a is meshed with a pinion gear 166. A coupling shaft 166a is provided eccentrically with respect to the center axis of the pinion gear 166.

The one end 167a of the coupling rod 167 extending vertically is coupled to the coupling shaft 166a for free rotation as shown in FIG. 7, while the other end 167b of the coupling rod 167 is coupled to the shift shaft 159 as shown in FIG. 8.

As shown in FIG. 8, the actuation force transmission mechanism 164 coupled to the coupling rod 167 may be covered by a case 190 and thereby protected from water and dust.

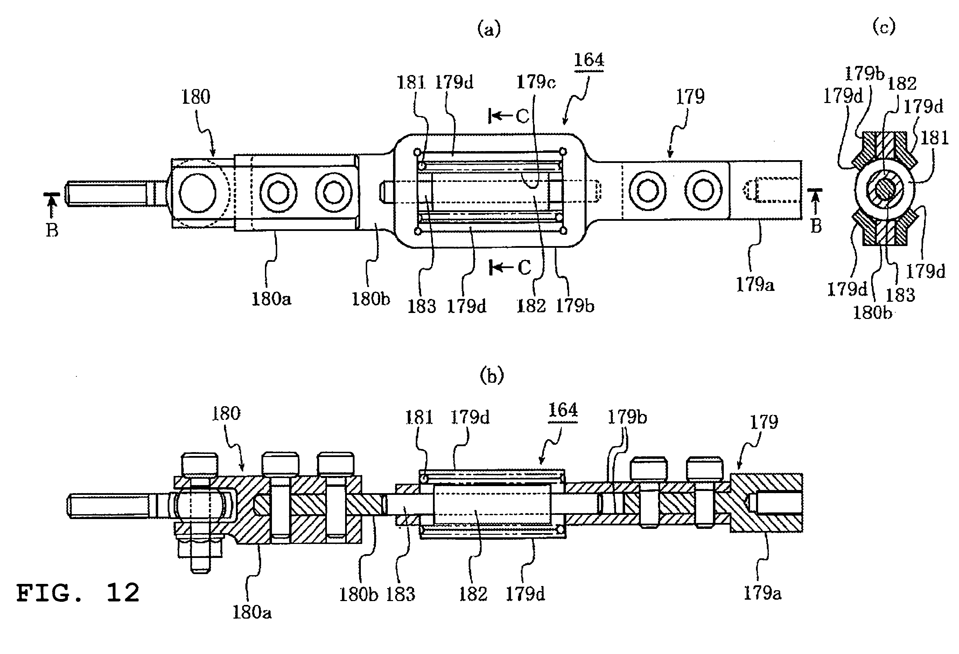

As shown in FIGs. 12 to 15, the actuation force transmission mechanism 164 is provided with first and second coupling parts 179, 180 slidably movable relative to each other in linear directions. A coil spring 181 as an "urging means" and a stopper member 182 are disposed between the first and second coupling parts 179, 180.

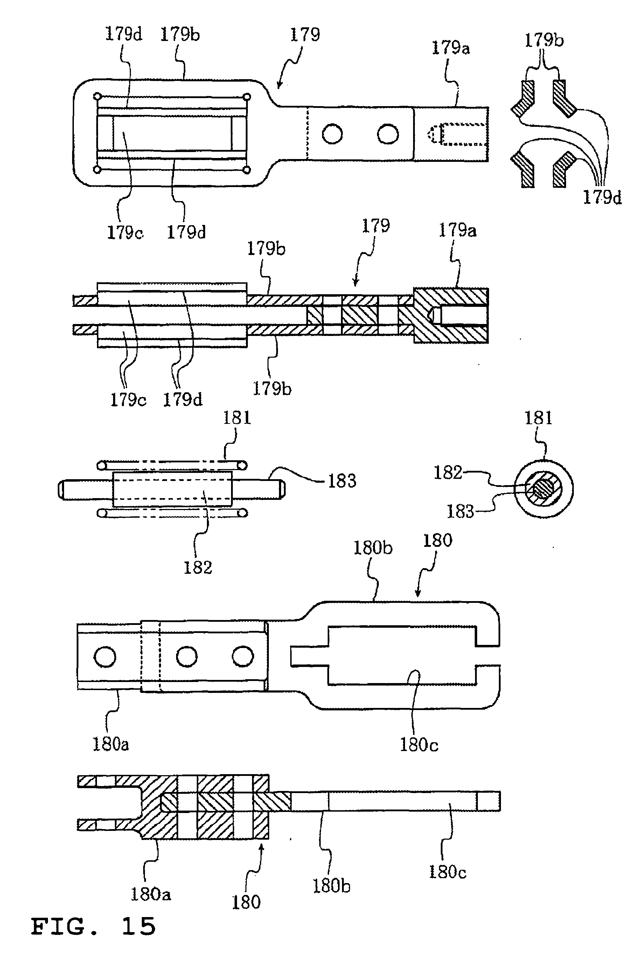

As shown in FIG. 15, the first coupling part 179 includes a base part 179a, and a pair of plate parts 179b fixed to the base part 179a with a constant interval. The two plate parts 179b are formed with an opening 179c where the coil spring 181 and the stopper member 182 are disposed, and with a coming-off prevention piece 179d for preventing the coil spring 181 and the stopper member 182 from coming off.

Also as shown in FIG. 15, the second coupling part 180 includes a base part 180a, and a single plate part 180b fixed to the base part 180a. The single plate part 180b can be inserted between the pair of plate parts 179b of the first coupling part 179. The plate part 180b is also formed with an opening 180c generally of the same size as the opening 179c of the plate parts 179b of the first coupling part 179.

The coil spring 181 is accommodated in the openings 179c, 180c of the respective plate parts 179b, 180b, and the columnar stopper member 182 is disposed inside the coil spring 181. A support shaft 183 is slidably inserted through the stopper member 182, and disposed between the plate parts 179b.

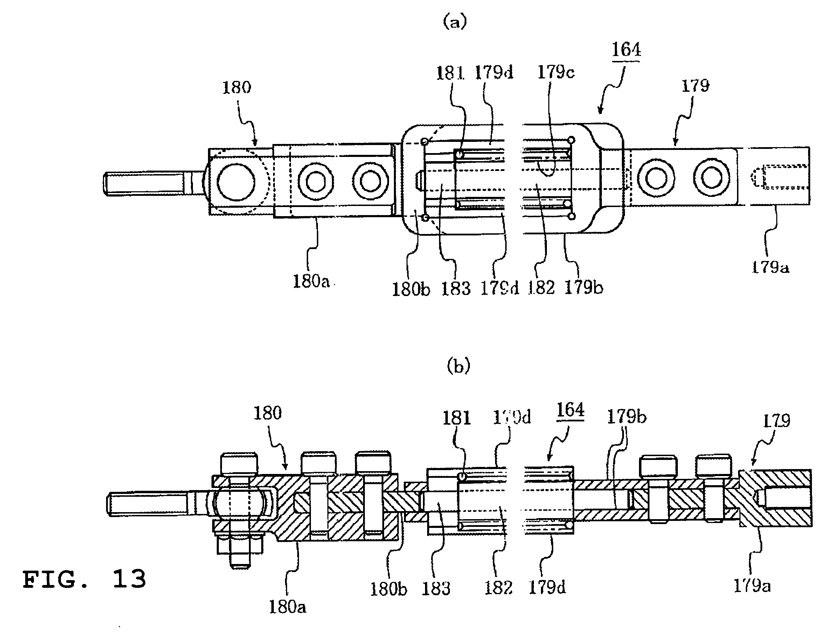

With this structure, to shift down, for example, the shift actuator 165 is driven to move the first and second coupling parts 179, 180 of the actuation force transmission mechanism 164 in compressing directions, and the coil spring 181 is compressed against its urging force from the state shown in FIG. 12 to the state shown in FIG. 13. This urging force rotates the shift shaft 159 to allow engagement or disengagement of the dog.

When the dog is to be engaged, there are cases where the dog contacts another dog due to bad timing and hence is not engaged immediately. Even in such cases, the dogs are subjected to comparatively small urging force of the coil spring 181 and hence do not abut against each other with large force. Thus, the components are protected from damage or the like. After that, the slide gears move rotationally slightly, and the urging force of the rotational movement causes the dogs to be meshed with each other reliably.

As the coil spring 181 is elastically deformed and compressed, the opening 179c of the plate parts 179b and the opening 180c of the plate part 180b are displaced from each other. At the time when the first and second coupling parts 179, 180 have moved relatively by a predetermined amount in linear directions, the width of an opening common to the displaced openings 179c, 180c becomes coincident with the width of the stopper member 182. This stops the relative movement of the first and second coupling parts 179, 180, and causes the first and second coupling parts 179, 180 to move rotationally together. Thus, even when the dog is engaged and difficult to be disengaged due to residual torque, the dog can be compulsorily disengaged.

On the other hand, to shift up, for example, the shift actuator 165 is driven to relatively move the first and second coupling parts 179, 180 in separating directions. Then, the opening 179c of the plate parts 179b and the opening 180c of the plate part 180b are displaced from the generally coincident position, and the coil spring 181 is compressed. The urging force of the coil spring 181 ensures engagement of the dog as described above.

Further from this state, as the coil spring 181 is elastically deformed, the opening 179c of the plate parts 179b and the opening 180c of the plate part 180b are displaced from each other. At the time when the first and second coupling parts 179, 180 have moved relatively by a predetermined amount in separating directions, the width of an opening common to the displaced openings 179c, 180c becomes coincident with the width of the stopper member 182. This stops the relative movement of the first and second coupling parts 179, 186, and causes the first and second coupling parts 179, 180 to move rotationally together. Thus, even when the dog is engaged and difficult to be disengaged due to residual torque, the dog can be compulsorily disengaged.

The first coupling part 179, the second coupling part 180 and the stopper member 182 of various structures are conceivable. Some examples are shown in FIGs . 16, 17(a) and 23(b).

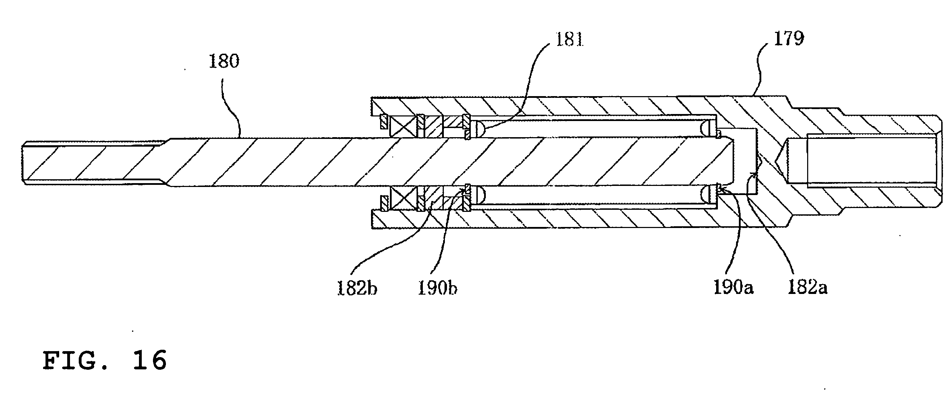

In the example shown in FIG. 16, the second coupling part 180 is constituted of a rod, and the first coupling part 179 is constituted of a cylindrical member for accommodating a part of the rod. The coil spring 181 as an urging means is disposed between the first coupling part (cylindrical member) 179 and the second coupling part (rod) 180. A sidewall 182a inside the first coupling part 179 and a step 182b provided on the inner surface of the first coupling part 179 respectively serve as stop members when the second coupling part 180 moves relative to the first coupling part 179.

For example, when the second coupling part 180 moves relative to the first coupling part 179 toward the right side of FIG. 16, the coil spring 181 is compressed by a circlip 190b embedded in a portion of the first coupling part 179. The second coupling part 180 moves relatively until its distal end contacts the sidewall (stop member) 182a inside the first coupling part 179.

Also, when the second coupling part 180 moves relative to the first coupling part 179 toward the left side of FIG. 16, the coil spring 181 is compressed by a circlip 190a embedded in a portion of the first coupling part 179. The second coupling part 180 moves relatively until the circlip 190b embedded in a portion of the first coupling part 179 contacts the step (stop member) 182b provided on the inner surface of the first coupling part 179.

The rod and the cylindrical member constituting the first coupling part 179 and the second coupling part 180 may be of a circular, rectangular or any other shape as long as the cylindrical member can accommodate the rod. The rod may have portions of different diameters, and a portion of a large diameter may be used as a part contacted by the spring.

In addition, the cylindrical member may be constituted with plural members having inner and outer surfaces. For example, the cylindrical member may be constituted with plural semi-cylindrical members divided along the linear direction of the rod. In this case, the cylindrical member includes plural cylindrical members.

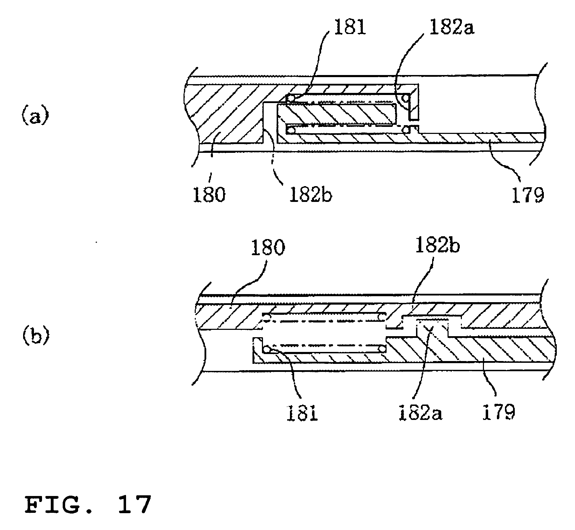

In the example shown in FIG. 17 (a), the distal end of the first coupling part 179 is bent back and inserted into an opening of the second coupling part 180. Sidewalls 182a, 182b of the opening are used as stopper members. In the example shown in FIG. 17 (b), a coil spring 181 is provided in an opening defined by the first coupling part 179 and the second coupling part 180. A projection 182a formed on the first coupling part 179 and a recess 182b formed in the second coupling part 180 are fitted to each other to serve as stopper members.

In these examples, the first coupling part 179 and the second coupling part 180 are arranged such that their distal ends overlap each other in linear directions.

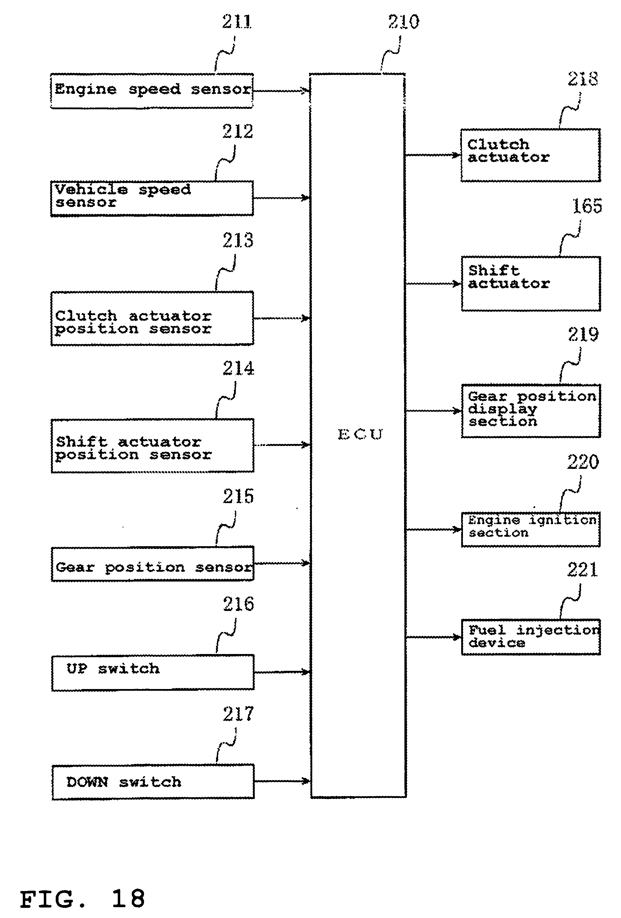

FIG. 18 shows the structure for drive control of the two-wheeled motor vehicle incorporating the actuation force transmission mechanism 164 of the present invention..

An engine control unit 210 for controlling the engine 151 is provided. To the engine control unit 210 are connected an engine speed sensor 211, a vehicle speed sensor 212, a clutch actuator position sensor (potentiometric sensor) 213, a shift actuator position sensor 214, a gear position sensor 215, an UP switch 216 for shifting up, and a DOWN switch 217 for shifting down. Detected values and operation signals from these components are input to the engine control unit 210. The UP switch 216 and the DOWN switch 217 are provided on the handlebars 143.

The engine control unit 210 is connected to a clutch actuator 218, the shift actuator 265, a gear position display section 219, an engine ignition section 220, and a fuel injection device 221, which are driven and controlled based on the signals from the various sensors 211, etc.

The signals from the UP switch 216, the DOWN switch 217, the shift actuator position sensor 214, the gear position sensor 215, etc., are input to the engine control unit 210, and control signals from the engine control unit 210 are used to drive and control the shift actuator 165.

Although the present invention has been described above by way of preferred embodiments, the above descriptions should not be construed as limitations, but various modifications may be made.

The shift control device in the present invention may be mounted on a two-wheeled motor vehicle shown in FIG. 6 to allow smooth shift change when the two-wheeled motor vehicle is running.

The term "two-wheeled motor vehicle" used herein means motorcycles including motorized bicycles (motorbikes) and scooters, and refers specifically to vehicles which can be turned by tilting the vehicle body. Thus, vehicle having two or more front wheels and/or two or more rear wheels and hence having a total of three or four (or more) wheels can be included in the "two-wheeled motor vehicle". The present invention is not limited to use in two-wheeled motor vehicles, but may also be applied to other vehicles which can take advantage of the effect of the present invention. Examples of such vehicles include the so-called straddle-type vehicles other than two-wheeled motor vehicles, such as four-wheeled buggies (all terrain vehicles (ATVs)) and snowmobiles.

The "shift actuator" may be of an electric or hydraulic type. Instead of coil spring, the "urging means" may be another type of spring, or an elastic member such as rubber, resin, etc.

When the present invention is to be applied to actual straddle-type vehicles, specific implementations should be examined from a comprehensive viewpoint which allows for each and every requirement in order to produce an excellent effect such as described above.

Industrial Applicability

An object of the present invention is to provide an actuation force transmission mechanism that is easy to install and maintain.

**Claims**

1. In a shift control device for a straddle-type vehicle for performing shift control in which a shift actuator is stroked by a predetermined amount to rotate a shift shaft,
   an actuation force transmission mechanism comprising:

   a first coupling part and a second coupling part coupled for relative movement in linear directions;
   an urging means for urging the first and second coupling parts toward a neutral position; and
   a stopper mechanism for stopping the relative movement of the first or second coupling part when the first or second coupling part is moved relatively from the neutral position against urging force of the urging means,
   wherein the actuation force transmission mechanism is interposed between the shift actuator and the shift shaft.

2. The actuation force transmission mechanism according to Claim 1, wherein the actuation force transmission mechanism is arranged such that, when resistive force acts against movement of the actuation force transmission mechanism:

   the first or second coupling part moves relatively against the urging force of the urging means until the first or second coupling part is stopped by the stopper mechanism; and
   then the first and second coupling parts move together.

3. The actuation force transmission mechanism according to Claim 1, wherein the first coupling part and the second coupling part are constituted of a rod and a cylindrical member for accommodating a part of the rod.

4. The actuation force transmission mechanism according to Claim 3, wherein:

   the urging means includes a coil spring; and
   the urging means is disposed between the rod and the cylindrical member.

5. The actuation force transmission mechanism according to Claim 4, wherein:

   the rod has portions of different diameters; and
   a portion of a large diameter is used as a part contacted by the spring.

6. The actuation force transmission mechanism according to Claim 3, wherein:

   the cylindrical member has a step on its inner surface; and
   the step is used as a part of the stopper mechanism.

7. The actuation force transmission mechanism according to Claim 3, wherein the cylindrical member is constituted with plural members having inner and outer surfaces.

8. The actuation force transmission mechanism according to Claim 7, wherein the cylindrical member includes plural cylindrical members.

9. The actuation force transmission mechanism according to Claim 1, wherein the first coupling part and the second coupling part are arranged such that their distal ends overlap each other in linear directions.

10. The actuation force transmission mechanism according to Claim 1, wherein the shift actuator is coupled to the shift shaft via a coupling rod, and the actuation force transmission mechanism is disposed at an intermediate portion of the coupling rod.

11. The actuation force transmission mechanism according to Claim 10, wherein the actuation force transmission mechanism is provided in a case held by the coupling rod.

12. The actuation force transmission mechanism according to Claim 1, wherein the actuation force transmission mechanism is disposed outside an engine case.

13. A straddle-type vehicle incorporating the actuation force transmission mechanism according to any one of Claims 1 to 12.

(a)

10

12

11b

11a

Shift shaft

Shift actuator

13

(b)

10

12b

12a

11b

11a

Shift shaft

Shift actuator

13b

13a

# FIG. 1

FIG. 2

FIG. 3

Rotational angle of shift shaft

① ② ③ ④ ⑤ ⑥

Stroke length of shift actuator

FIG. 4

(a)

$L_2$    $L_1$

12b    11b    12a    11a

13b    15    13a

(b)

z

y    a    x

12b    11b    12a    11a

13b    15    13a

# FIG. 5

FIG. 6

FIG. 7

FIG. 8

FIG. 9

FIG. 10

FIG. 11

(a)

(c)

$\underline{164}$

181 179d 179c 179

180

|←C

B

B

180a 180b 183 179d 182 179b 179a

179b 182
179d 179d 181

179d 179d

179d 183
180b

(b)

180 181 179d $\underline{164}$ 179b 179

FIG. 12

180a 180b 183 182 179d 179a

EP 1 767 832 A1

FIG. 13

FIG. 14

FIG. 15

FIG. 16

EP 1 767 832 A1

(a)

181    182a

180    182b    179

(b)

180    182b

181    182a    179

# FIG. 17

211 210

Engine speed sensor

218

Clutch
actuator

212

Vehicle speed
sensor

165

Shift
actuator

213

Clutch actuator
position sensor

ECU

219

Gear position
display
section

214

Shift actuator
position sensor

220

Engine ignition
section

215

Gear position sensor

221

Fuel injection
device

216

UP switch

217

DOWN switch

FIG. 18

## INTERNATIONAL SEARCH REPORT

| | International application No. |
|---|---|
| | PCT/JP2005/011804 |

**A. CLASSIFICATION OF SUBJECT MATTER**
Int.Cl$^7$  F16H63/18, 61/28

According to International Patent Classification (IPC) or to both national classification and IPC

**B. FIELDS SEARCHED**

Minimum documentation searched (classification system followed by classification symbols)
Int.Cl$^7$  F16H61/26-61/36, 63/00-63/38

Documentation searched other than minimum documentation to the extent that such documents are included in the fields searched
Jitsuyo Shinan Koho             1922-1996   Jitsuyo Shinan Toroku Koho    1996-2005
Kokai Jitsuyo Shinan Koho   1971-2005   Toroku Jitsuyo Shinan Koho   1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2-118269 A  (Yamaha Motor Co., Ltd.), 02 May, 1990 (02.05.90), Page 4, upper left column, lines 4 to 11; upper right column, lines 10 to 18; Fig. 2 (Family: none) | 1-13 |
| Y | JP 5-39865 A  (Honda Motor Co., Ltd.), 19 February, 1993 (19.02.93), Par. No. [0017]; Fig. 5 (Family: none) | 1-13 |

| ☒  Further documents are listed in the continuation of Box C. | ☐  See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 September, 2005 (14.09.05) | 04 October, 2005 (04.10.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2005/011804

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 3-172675 A  (Iseki & Co., Ltd., Kobe Steel, Ltd.),<br>26 July, 1991 (26.07.91),<br>Page 4, lower left column, line 3 to lower right column, line 19; Figs. 1, 6, 7<br>& US 5086896 A          & EP 429801 A2<br>& KR 9311564 B | 1-13 |
| Y | JP 2002-243034 A  (Isuzu Motors Ltd.),<br>28 August, 2002 (28.08.02),<br>Par. No. [0013]; Fig. 1<br>& US 2002/96009 A1       & US 2003/230158 A1<br>& EP 1225374 A2 | 4-9 |
| Y | JP 62-110532 A  (Fuji Tekkosho Kabushiki Kaisha, Nissan Motor Co., Ltd.),<br>21 May, 1987 (21.05.87),<br>Page 4, upper left column, lines 8 to 13;<br>Fig. 1<br>(Family: none) | 11 |
| A | US 1500878 A  (John F. KRUCHTEN),<br>08 July, 1924 (08.07.24),<br>Full text; Fig. 6<br>(Family: none) | 1-13 |
| A | EP 490730 A1  (Michel, Robert),<br>17 June, 1992 (17.06.92),<br>Full text; Fig. 5<br>& DE 69113224 C           & FR 2670265 A1 | 1-13 |

Form PCT/ISA/210 (continuation of second sheet) (January 2004)

**REFERENCES CITED IN THE DESCRIPTION**

**Patent documents cited in the description**

- JP 3044498 B

- JP 4311555 Y